# EUROPEAN PATENT SPECIFICATION

(11) **EP 3 089 610 B1**
(45) Date of publication and mention of the grant of the patent: **27.05.2020**
(21) Application number: 14838796.2
(22) Date of filing: 30.12.2014
(51) Int. Cl.: A43B 13/02, A43B 13/12, B29D 35/00, B29D 35/14, A43B 7/32, F41H 1/02

(54) **SOLE RESISTANT TO PERFORATION AND METHOD OF MANUFACTURING THEREOF**
PERFORATIONSRESISTENTE SOHLE UND VERFAHREN ZUR HERSTELLUNG DAVON
SEMELLE RÉSISTANT À LA PERFORATION ET SON PROCÉDÉ DE FABRICATION

(30) Priority: 03.01.2014 IT VR20140001
(43) Date of publication of application: 09.11.2016
(73) Proprietor: Vibram S.p.A., 21041 Albizzate (Varese) (IT)
(72) Inventor: CONCHIERI, Claudio, I-21041 Albizzate (Varese) (IT)
(74) Representative: Feltrinelli, Secondo Andrea
(86) International application number: PCT/IB2014/067411
(87) International publication number: WO 2015/101929

(56) References cited:
- WO-A1-97/04675
- FR-A1- 2 770 098
- US-A- 1 948 390
- US-B1- 6 505 421

## Description

### TECHNICAL FIELD OF THE INVENTION

The present invention regards a footwear sole that is resistant to perforation. The present invention also regards a method of manufacturing one such sole for footwear.

### STATE OF THE PRIOR ART

In the footwear industry, more particularly in the field of footwear of so-called "safety" type, the problem of manufacturing footwear that is comfortable but at the same time safe for field operators is widespread.

Generally, the more comfortable a shoe, the more its sole - in addition to being light - can be adapted to the position assumed each time by the foot of the operator who wears it.

The more the shoe is able to protect the foot from possible risks, the safer the shoe; such risks include in particular sole perforation, for example by nails, screws or pointed objects of various type that can inadvertently be left on the ground, especially in places such as work yards, warehouses, etcetera.

At the state of the art, there is footwear on the market so-called "safety" footwear, which at the sole have a layer made of metallic material, e.g. a steel plate, intended to prevent, in case of penetration by a pointed object, the contact of the penetrated object with the foot.

However, one such steel plate, in addition to making the sole of the shoe extremely rigid and heavier, is provided for covering only about 85% of the sole, such that the remaining 15% of the sole and, hence, of the foot wearing it, is still exposed to the risk of perforation by pointed objects.

Another problem of the safety footwear of known type is that in order to obtain the requested perforation resistant characteristics, the structural form of the shoe is relatively complex, comprising multiple elements that must be assembled together.

It is necessary to assemble the sole, of normal type, with multiple anti-perforation layers, e.g. by means of gluing and then applying the upper.

Alternatively, an insole suitably made with anti-perforation materials is introduced inside the already-formed shoe; hence a step of manufacturing such insoles must be provided along with the relative step of introduction and sewing on the upper, which in turn must be made so as to provide for the space for the anti-perforation insole. Examples of shoes with a sole structure comprising anti-perforation materials are described in WO 97/04675 and US 6,505,421 B1.

There is therefore the need to obtain a sole for footwear which, while remaining of conventional weight and size, in the field of safety footwear, is comfortable and resistant to perforation.

There is also the need to simplify the manufacturing of the safety footwear, rendering it similar or equivalent to the manufacturing of the footwear of normal type.

### OBJECTS OF THE INVENTION

Hence, the main object of the present invention is to improve the state of the art in the field of soles for footwear.

Another object of the present invention is to provide a sole for footwear which is more comfortable than the soles for conventional footwear.

Still another object of the present invention is to provide a sole for footwear which is more resistant to perforation with respect to the soles for conventional footwear. A further object of the present invention is to provide a sole for footwear, which is easy to manufacture at competitive costs.

Still another object of the present invention is to provide a sole for safety footwear already comprising the necessary layers of anti-perforation material, thus simplifying the manufacturing of the same safety footwear, i.e. entirely similar to the manufacturing of footwear of normal type.

Not least object of the present invention is to provide a method of manufacturing a sole for footwear that is easy and quick to implement.

According to a first aspect of the present invention, a sole for footwear is provided that is resistant to perforation, according to claim 1.

According to a further aspect of the present invention, a method is provided of manufacturing a sole for footwear according to claim 6.

Further advantageous characteristics of the footwear sole resistant to perforation and the method of manufacturing thereof are described in the dependent claims.

### BRIEF DESCRIPTION OF THE DRAWINGS

Other characteristics and advantages of the present invention will be clearer from the description of one embodiment of a sole for footwear, illustrated as a merely non-limiting example in the enclosed drawings, wherein:
figure 1 is a plan view of a sole for footwear according to the present invention;
figure 2 shows a cross section view of the footwear sole of Figure 1, taken along the section line II-II;
figure 3 illustrates a cross section view of a variant of the footwear sole of Figure 1, taken along the section line II-II;
figure 4 is a cross section view of another variant of the footwear sole of Figure 1, taken along the section line II-II; and
figure 5 shows a cross section view of a further variant of the footwear sole of Figure 1, taken along the section line II-II.

### EMBODIMENTS OF THE INVENTION

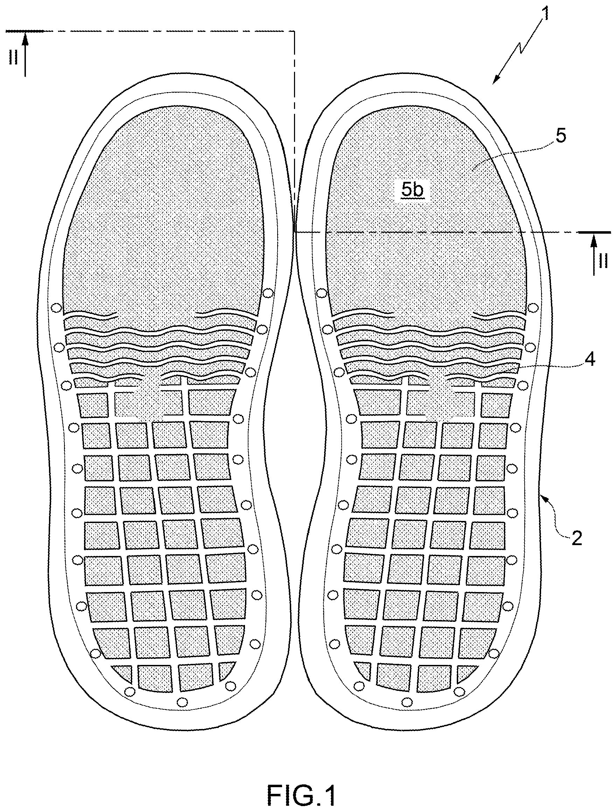

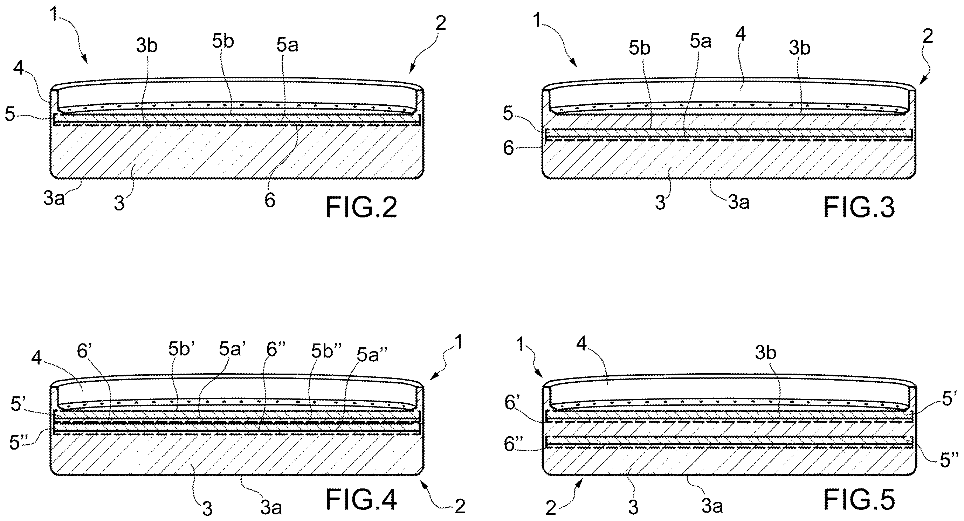

With reference to figures 1 and 2, it will be observed that a footwear sole resistant to perforation according to the present invention is generally indicated with the reference number 1 and comprises at least one outer sole 2, including a tread 3 and a perimeter edge 4 rising from the tread. The tread 3 has an outer face 3a provided, in use, for the contact with the ground and an internal face 3b, facing in use the perimeter edge 4.

The outer sole 2, as is typical in the "safety" footwear field, could be made of thermoplastic and/or thermosetting elastomeric material 3, e.g. NBR rubber, whose advantageous characteristics of high abrasion resistance and aging stability are known. According to the invention, the outer sole 2 is made of elastomeric thermoplastic rubber.

The sole according to the present invention also comprises a plurality of layers 5 of textile fiber material resistant to perforation, incorporated, as will be stated more clearly hereinbelow, in the tread 3 of the outer sole 2.

The layer 5 of material resistant to perforation is a multilayer textile fiber material capable of resisting to accidental perforations by nails or other pointed objects, even with very limited diameter, and complies with the standards provided by the field regulations, in particular UNI EN ISO 20344.

With reference to the enclosed figure 2, depicting an example not forming part of the present invention, in which only one layer 5 of textile fiber material resistant to perforation is depicted, it will be observed that such layer 5 has a plan configuration substantially corresponding to the plan configuration of the sole and has a face 5a, lower in use, facing the outer face 3a of the tread 3, and a face 5b, upper in use, facing the opposite side, or in other words towards the perimeter edge 4 rising from the tread. The outer sole 2 and the layer 5 of textile fiber material resistant to perforation are engaged with each other by molding the outer sole 2 on or around the layer 5, so as be chemically bonded without interruption to form a single body.

More particularly, the molecules chains of the textile fibers of the layer 5 resistant to perforation are bonded to those of the elastomeric material of the outer sole 2 by means of a curing process, which will be discussed hereinbelow.

For such purpose, the face 5a, lower in use, of the layer 5 of textile fiber material resistant to perforation can be at least partly covered by an auxiliary layer 6 of thermoplastic and/or thermosetting elastomeric material, intended to be bonded without interruption, in the above-described sense, to the elastomeric material of the outer sole during the manufacturing process thereof, thus facilitating an irreversible engagement between the outer sole 2 and the layer 5 made of perforation-resistant material.

The abovementioned auxiliary layer 6 of elastomeric material advantageously prevents possible lateral movements of the textile fibers of the layer 5, thus facilitating a greater resistance to perforation by pointed objects. The auxiliary layer is provided applied in any suitable manner on one or both faces 5a, 5b of the layer 5, without however penetrating inside the layer itself, thus maintaining good flexibility thereof and consequently a good level of comfort for the operator.

If desired, the auxiliary layer 6 and the outer sole 2 can be obtained with the same thermoplastic and/or thermosetting elastomeric material.

The footwear sole comprises the layer 5 of textile fiber material resistant to perforation provided, for example, at the top of the tread 3 (Figure 2). In this manner, it also acts as an inter-sole for a shoe, above which it is possible, if desired, to apply an insole or arch support.

According to a variant of the footwear sole not forming part of the present invention (see figure 3), the layer 5 of textile fiber material resistant to perforation is provided at an intermediate portion of the tread 3 and is therefore completely embedded or incorporated in the sole itself. In this case, above all if the sole provides for, at the heel, a configuration with lightening cavity (e.g. as represented in Fig. 1), the shoe employing one such sole must comprise an inter-sole supported at the top of the outer sole 2.

According to the present invention, a plurality of layers (5', 5", etc.) of textile fiber material resistant to perforation (two in Figures 4 and 5) are provided for, overlapping each other. Optionally, each of such layers 5', 5" will have at least one face (5a' or 5b', 5a" or 5b") at least partly covered by an auxiliary layer 6', 6" of thermoplastic and/or thermosetting elastomeric material. Such face can be the one that is lower in use 5a', 5a", etc., or it can be the one that is upper in use (5b', 5b", etc.). In such a manner, during the manufacturing process that will be described hereinbelow, the layers 5', 5", etc. will be more easily fixable to the outer sole 2.

According to the present invention, between one layer (5') and the other (5"), the sole according to the present invention comprises a layer or, in any case, a certain quantity of the elastomeric material employed for the outer sole 2 (see in particular figure 5). The footwear sole resistant to perforation according to the present invention is made in a simple and effective manner.

The method of manufacturing thereof comprises an initial step of arranging a mold of conventional type, provided for obtaining soles for "safety" footwear.

On the bottom of the mold, provision is made for introducing at least a certain quantity of uncured elastomeric material of the type suitable for obtaining the outer sole 2. As is known, such uncured elastomeric material, at the initial work conditions, is ductile and therefore deformable under the effect of a suitable pressure and temperature.

The method then provides for inserting in the mold, above the quantity of uncured elastomeric material, at least one layer 5 of textile fiber material resistant to perforation.

As stated above, such layer can have one or both faces thereof - lower in use and/or upper in use (5a, 5b) - at least partly covered with a layer of auxiliary material 6 of elastomeric type, of a type seemingly identical but in fact quite different from that employed for obtaining the tread, in any case suitable for being molded together with the elastomeric material of the sole.

Provision is made for a step of closing the mold and applying, in the mold itself, a certain pressure and a certain temperature, thus obtaining the molding of the sole itself.

In the mold, the uncured elastomeric material hardens due to the vulcanization on or around the layer 5 of textile fiber material resistant to perforation, thus obtaining a footwear sole provided with an outer sole 2 and at least one layer 5 of textile fiber material resistant to perforation, chemically bonded together without interruption to form a single body.

If, in a variant not forming part of the current invention, it is intended to obtain a footwear sole comprising only one layer of material resistant to perforation, provided at intermediate position in the tread 3, before the step of closing the mold, provision is made for a step of inserting - in any suitable manner, above the layer 5 in textile fiber material resistant to perforation - an additional quantity of uncured elastomeric material employed for the outer sole 2.

According to the present invention, the sole to be obtained comprises a plurality of layers of material resistant to perforation 5. They will be inserted in the mold overlapping each other and by means of interposition of a certain additional quantity of uncured elastomeric material employed for the outer sole 2.

As will be understood, a "safety" footwear sole manufactured according to the above-described method, has the advantage of being flexible and light, as well highly resistant to perforation by pointed objects. Additionally, the fact that the layer 5 of material resistant to perforation has a plan configuration substantially corresponding to the plan configuration of the footwear sole allows providing greater protection to the foot with respect to the conventional "safety" footwear.

The above-described method can be executed according to the above-described sequence. Alternatively, in an example not forming part of the present invention, provision can be made to initially insert, in the mold, the layer(s) 5, 5', 5", etc. of textile fiber material resistant to perforation, supported in the mold in accordance with requirements in any suitable manner, and to subsequently add the uncured elastomeric material before closing the mold itself.

## Claims

1. Sole for footwear comprising:
- at least one outer sole (2) in elastomeric thermoplastic rubber material comprising a tread (3) and a perimeter edge (4) rising from said tread (3), said tread (3) comprising an outer face (3a); and
- at least one layer (5) of textile fibre material resistant to perforation having a lower face (5a) facing said outer face (3a) of said tread (3), and an upper face (5b) facing said perimeter edge (4); and **characterized in that** said sole comprises a plurality of said layers in textile fibre material resistant to perforation (5', 5", ...), said plurality of layers overlapping one another in said tread (3) with interposition of said elastomeric thermoplastic rubber material of said at least one outer sole (2),
said at least one outer sole (2) and said plurality of layers (5, 5', 5", ...) of said textile fibre material resistant to perforation are engaged by moulding said at least one outer sole (2) around said plurality of layers (5, 5', 5", ...) of said textile fibre material resistant to perforation.

2. Sole according to claim 1, wherein said at least one layer (5) of said textile fibre material resistant to perforation of said plurality of layers (5, 5', 5", ...) has at least one auxiliary layer (6) of thermoplastic and/or thermosetting elastomeric material at at least one of the respective faces (5a, 5b).

3. Sole according to claim 2, wherein said thermoplastic and/or thermosetting elastomeric material of said at least one auxiliary layer (6) comprises said elastomeric thermoplastic rubber material of said outer sole (2).

4. Sole according to any claim 1 or 3, wherein said at least one layer (5) of textile fibre material resistant to perforation is provided in an intermediate area of said tread (3).

5. Sole according to any one of previous claims, wherein said elastomeric thermoplastic rubber material comprises styrene-butadiene.

6. Method of manufacturing a sole for footwear comprising the following operational steps of:
- arranging at least one mould adapted to moulding said outer sole;
- introducing into said mould at least one certain quantity of uncured elastomeric thermoplastic rubber material for said outer sole (2);
- arranging above said quantity of uncured elastomeric thermoplastic rubber material at least one layer (5) of textile fibre material resistant to perforation;
- closing said mould;
- applying to said mould a sufficient pressure and a temperature to cause the moulding of said uncured elastomeric thermoplastic rubber material on or around said at least one layer (5),
wherein between said step of arranging above said quantity of uncured elastomeric thermoplastic rubber material at least one layer (5) of textile fibre material resistant to perforation and said step of closing said mould, at least one step of applying at least one additional quantity of said uncured elastomeric thermoplastic rubber material on said at least one layer (5) of textile fibre material is provided and wherein said step of arranging above said quantity of uncured elastomeric thermoplastic rubber material at least one layer (5) of textile fibre material resistant to perforation comprises a step of arranging a plurality of layers (5', 5", ...) overlapping one another with interposition of an additional quantity of said uncured elastomeric thermoplastic rubber material.

7. Method according to claim 6, wherein said step of arranging above said quantity of uncured elastomeric thermoplastic rubber material at least one layer (5) of textile fibre material resistant to perforation comprises at least partly covering by an auxiliary layer (6) of thermoplastic and/or thermosetting elastomeric material the face (5a), lower in use, of said layer (5) of textile fiber material resistant to perforation, intended to be bonded without interruption to the elastomeric thermoplastic rubber material of the outer sole (2) during said manufacturing method, thus facilitating an irreversible engagement between the outer sole (2) and the layer (5) made of perforation-resistant material.

8. Footwear comprising a sole according any claim 1 to 5.

9. Footwear manufactured with a method according to any claim 6 to 7.

## Patentansprüche

1. Sohle für Schuhwerk, umfassend:
- mindestens eine Außensohle (2) aus elastomerem thermoplastischem Gummimaterial, umfassend eine Lauffläche (3) und eine Umfangskante (4), die sich von der besagten Lauffläche (3) erhebt,
wobei die besagte Lauffläche (3) eine Außenfläche (3 a) umfasst, und
- mindestens eine Schicht (5) aus perforationsbeständigem Textilfasermaterial mit einer unteren Fläche (5a), die der besagten Außenfläche (3a) der besagten Lauffläche (3) zugewandt ist, und einer oberen Fläche (5b), die der besagten Umfangskante (4) zugewandt ist; und **dadurch gekennzeichnet, dass** die besagte Sohle eine Vielzahl der besagten Schichten aus perforationsbeständigem Textilfasermaterial (5', 5", ...) umfasst, wobei die besagte Vielzahl von Schichten einander in der besagten Lauffläche (3) mit Zwischenlage des besagten elastomeren thermoplastischen Gummimaterials der besagten mindestens einen Außensohle (2) überlappen,
die besagte mindestens eine Außensohle (2) und die besagte Vielzahl von Schichten (5, 5', 5", ...) des besagten perforationsbeständigen Textilfasermaterials durch Formen der besagten mindestens einen Außensohle (2) um die besagte Vielzahl von Schichten (5, 5', 5", ...) des besagten perforationsbeständigen Textilfasermaterials in Eingriff stehen.

2. Sohle nach Anspruch 1, worin die besagte mindestens eine Schicht (5) des besagten perforationsbeständigen Textilfasermaterials der besagten Vielzahl von Schichten (5, 5', 5", ...) mindestens eine Hilfsschicht (6) aus thermoplastischem und/oder wärmehärtbarem Elastomermaterial auf mindestens einer der jeweiligen Flächen (5 a, 5b) aufweist.

3. Sohle nach Anspruch 2, worin das besagte thermoplastische und/oder wärmehärtbare Elastomermaterial der besagten mindestens einen Hilfsschicht (6) das besagte elastomere thermoplastische Gummimaterial der besagten Außensohle (2) umfasst.

4. Sohle nach einem der Ansprüche 1 oder 3, worin die besagte mindestens eine Schicht (5) aus perforationsbeständigem Textilfasermaterial in einem Zwischenbereich der besagten Lauffläche (3) vorgesehen ist.

5. Sohle nach irgendeinem der vorangegangenen Ansprüche, worin das besagte elastomere thermoplastische Gummimaterial Styrol-Butadien umfasst.

6. Verfahren zur Herstellung einer Sohle für Schuhwerk, umfassend die folgenden Arbeitsschritte des:
- Anordnens mindestens einer Form, die zum Formen der besagten Außensohle geeignet ist;
- Einbringens mindestens einer bestimmten Menge an ungehärtetem elastomerem thermoplastischem Gummimaterial für die besagte Außensohle (2) in die besagte Form;
- Anordnens über der besagten Menge des ungehärteten elastomeren thermoplastischen Gummimaterials mindestens einer Schicht (5) aus perforationsbeständigem Textilfasermaterial;
- Schließens der besagten Form;
- Aufbringen eines ausreichenden Drucks und einer Temperatur auf die besagte Form, um das Formen des besagten ungehärteten elastomeren thermoplastischen Gummimaterials auf oder um die besagte mindestens eine Schicht (5) herum zu bewirken,
worin zwischen dem besagten Schritt des Anordnens über der besagten Menge des ungehärteten elastomeren thermoplastischen Gummimaterials mindestens einer Schicht (5) aus perforationsbeständigem Textilfasermaterial und dem besagten Schritt des Schließens der besagten Form mindestens ein Schritt des Aufbringens mindestens einer zusätzlichen Menge des besagten ungehärteten elastomeren thermoplastischen Gummimaterials auf die besagte mindestens eine Schicht (5) des Textilfasermaterials vorgesehen ist und worin der besagte Schritt des Anordnens über der besagten Menge des ungehärteten elastomeren thermoplastischen Gummimaterials mindestens einer Schicht (5) aus perforationsbeständigem Textilfasermaterial einen Schritt des Anordnens einer Vielzahl von Schichten (5', 5", ....), die einander mit Zwischenlage einer zusätzliche Menge des besagten ungehärteten elastomeren thermoplastischen Gummimaterials überlappen, umfasst.

7. Verfahren nach Anspruch 6, worin der besagte Schritt des Anordnens über der besagten Menge des ungehärteten elastomeren thermoplastischen Gummimaterials mindestens einer Schicht (5) aus perforationsbeständigem Textilfasermaterial mindestens teilweise das Bedecken durch eine Hilfsschicht (6) aus thermoplastischem und/oder wärmehärtbarem Elastomermaterial der bei Verwendung unteren Fläche (5a) der besagten Schicht (5) des perforationsbeständigen Textilfasermaterials, die dazu vorgesehen ist, während des besagten Herstellungsverfahrens ohne Unterbrechung mit dem elastomeren thermoplastischen Gummimaterial der Außensohle (2) verbunden zu werden, umfasst, wodurch ein irreversibler Eingriff zwischen der Außensohle (2) und der Schicht (5) aus perforationsbeständigem Material erleichtert wird.

8. Schuhwerk, umfassend eine Sohle nach den Ansprüchen 1 bis 5.

9. Schuhwerk, hergestellt mit einem Verfahren nach den Ansprüchen 6 bis 7.

## Revendications

1. Semelle pour chaussure comprenant :
- au moins une semelle extérieure (2) en élastomère thermoplastique comprenant une semelle (3) et un bord périphérique (4) s'élevant depuis ladite semelle (3), ladite semelle (3) comprenant une face extérieure (3a) ; et
- au moins une couche (5) de fibre textile résistante à la perforation comportant une face inférieure (5a) orientée vers ladite face extérieure (3a) de ladite semelle (3), et une face supérieure (5b) orientée vers ledit bord périphérique (4) ; et **caractérisée en ce que** ladite semelle comprend une pluralité desdites couches de fibre textile résistantes à la perforation (5', 5", ...), ladite pluralité de couches se chevauchant les unes les autres dans ladite semelle (3) avec l'interposition dudit élastomère thermoplastique de ladite au moins une semelle extérieure (2),
ladite au moins une semelle extérieure (2) et ladite pluralité de couches (5, 5', 5", ...) de ladite fibre textile résistante à la perforation sont accouplées en moulant ladite au moins une semelle extérieure (2) autour de ladite pluralité de couches (5, 5', 5", ...) de ladite fibre textile résistante à la perforation.

2. Semelle selon la revendication 1, dans laquelle ladite au moins une couche (5) de ladite fibre textile résistante à la perforation de ladite pluralité de couches (5, 5', 5", ...) comporte au moins une couche auxiliaire (6) d'élastomère thermoplastique et/ou thermodurcissant sur au moins une des faces (5a, 5b) respectives.

3. Semelle selon la revendication 2, dans laquelle ledit élastomère thermoplastique et/ou thermodurcissant de ladite au moins une couche auxiliaire (6) comprend ledit élastomère thermoplastique de ladite semelle extérieure (2).

4. Semelle selon l'une quelconque des revendications 1 ou 3, dans laquelle ladite au moins une couche (5) de fibre textile résistante à la perforation est disposée dans une zone intermédiaire de ladite semelle (3).

5. Semelle selon l'une quelconque des revendications précédentes, dans laquelle ledit élastomère thermoplastique comprend du butadiène-styrène.

6. Procédé de fabrication d'une semelle pour chaussure comprenant les opérations suivantes consistant à :
- prévoir au moins un moule adapté au moulage de ladite semelle extérieure ;
- introduire dans ledit moule au moins une certaine quantité d'élastomère thermoplastique non vulcanisé pour ladite semelle extérieure (2) ;
- disposer au-dessus de ladite quantité d'élastomère thermoplastique non vulcanisé au moins une couche (5) de fibre textile résistante à la perforation ;
- fermer ledit moule ;
- appliquer audit moule une pression suffisante et une température entraînant le moulage dudit élastomère thermoplastique non vulcanisé sur ou autour de ladite au moins une couche (5),
dans laquelle entre ladite étape d'agencement au-dessus de ladite quantité d'élastomère thermoplastique non vulcanisé d'au moins une couche (5) de fibre textile résistante à la perforation et ladite étape de fermeture dudit moule, au moins une étape d'application d'au moins une quantité supplémentaire dudit élastomère thermoplastique non vulcanisé sur ladite au moins une couche (5) de fibre textile est prévue et dans laquelle ladite étape d'agencement au-dessus de ladite quantité d'élastomère thermoplastique non vulcanisé d'au moins une couche (5) de fibre textile résistante à la perforation comprend une étape d'agencement d'une pluralité de couches (5', 5", ...) se chevauchant les unes les autres avec l'interposition d'une quantité supplémentaire dudit élastomère thermoplastique non vulcanisé.

7. Procédé selon la revendication 6, dans lequel ladite étape d'agencement au-dessus de ladite quantité d'élastomère thermoplastique non vulcanisé d'au moins une couche (5) de fibre textile résistante à la perforation comprend la couverture au moins partielle par une couche auxiliaire (6) d'élastomère thermoplastique et/ou thermodurcissant de la face (5a), inférieure en utilisation, de ladite couche (5) de fibre textile résistante à la perforation, destinée à être collée sans interruption à l'élastomère thermoplastique de la semelle extérieure (2) pendant ledit procédé de fabrication, facilitant ainsi un accouplement irréversible entre la semelle extérieure (2) et la couche (5) constituée de matière résistante à la perforation.

8. Chaussure comprenant une semelle selon l'une quelconque des revendications 1 à 5.

9. Chaussure fabriquée par un procédé selon l'une quelconque des revendications 6 à 7.
